# EUROPÄISCHE PATENTSCHRIFT

(11) **EP 2 089 265 B1**
(45) Veröffentlichungstag und Bekanntmachung des Hinweises auf die Patenterteilung: **27.01.2010**
(21) Anmeldenummer: 07822122.3
(22) Anmeldetag: 31.10.2007
(51) Int. Cl.: B62D 5/00

(54) **BETRIEBSVERFAHREN FÜR EIN LENKSYSTEM EINES ZWEISPURIGEN KRAFTFAHRZEUGS**
OPERATING METHOD FOR A STEERING SYSTEM OF A TWO-TRACK MOTOR VEHICLE
PROCÉDÉ D'EXPLOITATION POUR UN SYSTÈME DE DIRECTION D'UN VÉHICULE AUTOMOBILE À QUATRE ROUES

(30) Priorität: 13.11.2006 DE 102006053294
(43) Veröffentlichungstag der Anmeldung: 19.08.2009
(73) Patentinhaber: Bayerische Motoren Werke Aktiengesellschaft, 80809 München (DE)
(72) Erfinder: SONNTAG, Achim, 82140 Olching (DE); KLOSTERHUBER, Thomas, 80337 München (DE); GRÄF, Michael, 82166 Gräfelfing (DE)
(86) Internationale Anmeldenummer: PCT/EP2007/061775
(87) Internationale Veröffentlichungsnummer: WO 2008/058850

(56) Entgegenhaltungen:
- EP-A- 1 445 171
- EP-A- 1 510 436
- EP-A- 1 593 582
- US-A1- 2006 234 537

## Beschreibung

Die Erfindung betrifft ein Betriebsverfahren für ein Lenksystem eines zweispurigen Kraftfahrzeugs mit einem Lenkgetriebe, welches Spurstangen, die letztlich mit den lenkbaren Fahrzeug-Rädern mechanisch verbunden sind, einer Lenkanforderung entsprechend verlagert, weiterhin mit einem Elektromotor zum Einleiten einer eine Verlagerung der Spurstangen initiierenden oder unterstützenden Kraft in das Lenkgetriebe, wobei an einem vom Fahrer zu betätigenden Lenkrad ein Lenkwinkel-Sensor und ein Lenkmoment-Sensor sowie ein elektromotorischer Lenkrad-Steller vorgesehen sind, um einen vom Fahrer vorgegebenen Lenkwunsch unter Verarbeitung der Signale des Lenkwinkel-Sensors und des Lenkmoment-Sensors bei gleichzeitig geeigneter Ansteuerung des Lenkrad-Stellers durch geeignete Ansteuerung des mit einem Drehwinkel-Sensor im weitesten Sinne ausgestatteten Elektromotors seitens einer elektronischen Steuereinheit umzusetzen, wobei weiterhin ein insbesondere flexibles mechanisches Übertragungselement sowie zumindest eine schaltbare Kupplung oder ein sonstiges Trennelement zum Auftrennen oder Schließen einer mechanischen Verbindung zwischen dem Lenkrad und einem Eingangselement des Lenkgetriebes vorgesehen ist, so dass bei geschlossener Kupplung oder geschlossenem Trennelement über das Übertragungselement und das Lenkgetriebe an den lenkbaren Rädern ein vom Fahrer vorgegebener Lenkwunsch umsetzbar ist.

Vereinfacht ausgedrückt betrifft die vorliegende Erfindung ein sog. steer-by-wire-System mit mechanischer Rückfallebene, wie es bspw. aus der EP 1 445 171 A2 bekannt ist. Üblicherweise erfolgt dabei das Einschlagen der lenkbaren Räder alleine durch den anhand der Fahrer-Vorgabe geeignet angesteuerten Elektromotor und somit auf elektrisch-elektronischem Wege. Fällt jedoch eines der für diese Ansteuerung bzw. für die Ermittlung der Fahrer-Vorgabe benötigten Elemente aus, so wird (oder werden) die/das besagte(n) Kupplung(en) oder Trennelement(e) im mechanischen Lenkstrang geschlossen, so dass weiterhin das Kraftfahrzeug auf rein mechanischem Wege sicher gelenkt werden kann. Bei einem derartigen Trennelement, das ein Auftrennen oder Schließen einer mechanischen Verbindung zwischen dem Lenkrad und dem Eingangselement des Lenkgetriebes erlaubt, kann es sich beispielsweise um ein Planetengetriebe handeln, dessen Hohlrad frei drehen oder stillgesetzt werden kann.

In der genannten EP 1 445 171 A2 ist vorgeschlagen, dass bei einem Ausfall entweder des dem Lenkgetriebe zugeordneten Elektromotors oder des elektromotorischen Lenkrad-Stellers nach Schließen der Kupplung(en) oder Trennelement(e) jeweils der andere Motor die Funktion des ausgefallenen Motors mit übernimmt.

In der EP 1 593 582 A2 ist ein Verfahren zur Steuerung einer elektrischen Servolenkung eines Fahrzeugs beschrieben, mit einem elektrischen Servomotor, mit einer Lenkhandhabe zur Eingabe eines Lenkwinkel-Sollwertes in eine Steuer- und/oder Regelungseinrichtung, mit einem Momentensensor und einem Winkelsensor für die Lenkhandhabe und mit einer Einrichtung zum Abschätzen des Momentes an der Lenkhandhabe und mit einem Winkelsensor zur Bestimmung des Winkels eines Abtriebs des elektrischen Servomotors, wonach bei Ausfall oder einer Fehlfunktion des Momentensensors an der Lenkhandhabe der elektrischen Servolenkung ein unkritisches Verhalten der ermöglicht wird, indem ständig ein Offsetwert aus dem Lenkwinkel-Sollwert und dem Lenkwinkel-Istwert gebildet wird und ein virtuelles Moment der Lenkhandhabe anhand des Offsetwertes ermittelt wird, mit dem der elektrische Servomotor angesteuert wird.

Vorliegend soll nun für ein Lenksystem nach den Anspruch 1 ein einfaches Verfahren aufgezeigt werden, wie bei Ausfall des Lenkmoment-Sensors unter Aktivierung der mechanischen Rückfallebene die beiden weiterhin funktionsfähigen Motoren, nämlich der dem Lenkgetriebe zugeordnete Elektromotor und der elektromotorische Lenkrad-Steller bestmöglich weiterbetrieben werden können, um dem Fahrer ein komfortables Lenken zu ermöglichen (= Aufgabe der vorliegenden Erfindung).

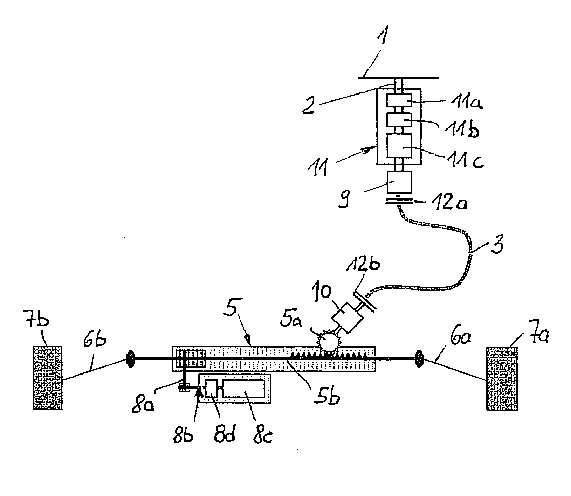

Die Lösung dieser Aufgabe ist durch die kennzeichnenden Merkmale des einzigen Patentanspruchs gegeben, wie im folgenden unter Bezugnahme auf die beigefügte Figur erläutert wird.

Das vereinfacht dargestellte Lenksystem weist ein vom Fahrer betätigtes Lenkrad 1 auf, an dessen Lenkspindel 2 (oder Lenksäule 2) sich unter Zwischenschaltung eines Untersetzungsgetriebes 9 sowie einer ersten Kupplung 12a ein bspw. als flexible Welle ausgebildetes mechanisches Übertragungselement 3 (zur Übertragung einer Lenkrad-Drehbewegung) anschließt, das in einer weiteren Kupplung 12b mündet, deren Abtriebsseite mit einem die Wirkung des Untersetzungsgetriebes 9 aufhebenden Übersetzungsgetriebe 10 verbunden ist, dessen Abtrieb mit einem Ritzel 5a einer Zahnstangenlenkung 5 (im weiteren auch als Lenkgetriebe 5 bezeichnet) verbunden ist. Die Zahnstange 5b dieser Zahnstangenlenkung 5 bzw. dieses Lenkgetriebes 5 betätigt über ihre beiden Enden wie bekannt Spurstangen 6a, 6b, die das linke lenkbare Vorder-Rad 7a bzw. das rechte lenkbare Vorder-Rad 7b des Kraftfahrzeugs einer seitlichen Verschiebung der Zahnstange 5b entsprechend einschlagen, d.h. lenken. Zusätzlich kann auf die Zahnstange 5b über ein Zwischengetriebe 8a die Abtriebswelle 8b eines Elektromotors 8c einwirken. Anstelle einer oder der genannten Kupplung(en) kann ein anderes Trennelement in Form eines bereits genannten Planetengetriebes vorgesehen sein und es kann in diesem Fall die im Untersetzungsgetriebe 9 erfolgende Untersetzung und/oder die im Übersetzungsgetriebe 10 erfolgende Übersetzung in der Getriebestufe dieses oder dieser Planetengetriebe(s) integriert sein.

Zurückkommend auf die drehfest mit dem Lenkrad verbundene Lenkspindel 2 ist in bzw. an dieser ein Lenkwinkel-Sensor 11a zur Erfassung des vom Fahrer vorgegebenen Lenkwinkels sowie ein Lenkmoment-Sensor 11b zur Erfassung des anliegenden Lenkmoments vorgesehen. Diese beiden Sensoren sind Bestandteil eines sog. Lenkrad-Stellers 11, der weiterhin einen elektrischen Motor 11 c (oder sonstigen Aktuator) enthält, der an die Lenkspindel 2 ein Drehmoment anlegen kann.

Wenn zumindest eine der beiden, vorzugsweise jedoch beide Kupplungen 12a, 12b geöffnet sind, so stellt sich dieses Lenksystem als "steer-by-wire"-System mit mechanischer Rückfallebene dar, d.h. der Elektromotor 8 wird anhand des im Lenkrad-Steller 11 von den dortigen Sensoren (11a, 11b) ermittelten Fahrer-Lenkwunsches von einer elektronischen Steuereinheit diesem Wunsch entsprechend angesteuert, um die lenkbaren Räder 7a, 7b entsprechend einzuschlagen. Dabei wird ebenfalls von dieser elektronischen Steuereinheit der elektrische Motor 11c des Lenkrad-Stellers 11 derart angesteuert, dass der Fahrer an seinem Lenkrad 1 ein der jeweiligen Fahrsituation entsprechendes Lenkmoment, vorzugsweise Widerstandsmoment, verspürt, welches aus einer Fahrzustandserkennung abgeleitet wird.

Fällt eines der für die genannte Ansteuerung bzw. für die Ermittlung der Fahrer-Vorgabe benötigten Elemente aus, so werden die besagten Kupplungen 12a, 12b geschlossen, so dass weiterhin das Kraftfahrzeug sicher gelenkt werden kann, und zwar durch mechanische Übertragung des Fahrer-Lenkwunsches vom Lenkrad 1 über das Übertragungselement 3 zum Lenkgetriebe 5. Gleiches gilt, wenn anstelle der Kupplungen ein Planetengetriebe oder ein anderes sog. Trennelement im mechanischen Lenksystem vorgesehen ist.

In Abhängigkeit davon, welches der genannten Elemente ausfällt, werden nun jedoch nicht sämtliche Elemente des "steer-by-wire-Systems" außer Betrieb gesetzt, sondern es wird, wenn ein Fehler in einer Komponente erkannt ist, nur diese Komponente bzw. das fehlerhafte Element passiv geschaltet. Die verbleibenden Komponenten bzw. Elemente des Gesamtsystems sollen weiter geeignet genutzt werden können, wobei eine elektrische Hilfskraftlenkung realisiert wird, wie im Folgenden erläutert wird.

Bei einem Ausfall des elektrischen Motors 11c des Lenkrad-Stellers 11 wird zwar dieser elektrische Motor 11 c abgeschaltet und es werden die Kupplungen 12a, 12b geschlossen, womit ein sicherer Zustand hergestellt ist, es kann jedoch weiterhin mit Hilfe des Lenkmomentsensors 11 b im Lenkradsteller 11 und mit dem Elektromotor 8c durch geeignete Ansteuerung desselben (mittels der bereits genannten elektronischen Steuereinheit) eine geregelte Servounterstützung, d.h. eine elektrische Lenkunterstützung bereitgestellt werden. Diese stellt abhängig vom mit dem Sensor 11 b gemessenen Lenkmoment eine Unterstützungskraft zur Verfügung.

Eine solche Vorgehensweise ist auch möglich, wenn der Lenkwinkel-Sensor 11a des Lenkrad-Stellers 11 ausfällt. Dann kann ebenfalls mit geschlossenen Kupplungen 12a, 12b mit Hilfe eines üblichen, im Elektromotor 8c vorhandenen Kommutierungs-Sensors (= Inkrementgeber), der als Drehwinkel-Sensor 8d im weitesten Sinne bezeichnet werden kann, der vom Fahrer aufgebrachte Lenkwinkel ermittelt werden, indem durch eine geeignete Software-Funktion die von diesem Drehwinkel-Sensor 8d ermittelten Winkel-Inkremente aufaddiert werden und so ein Fahrer-Lenkwinkel ermittelt wird.

Auch auf einen Ausfall des Elektromotors 8c kann reagiert und eine Lenkunterstützung bereit gestellt werden. Dabei wird zunächst der ausgefallene Elektromotor 8c abgeschaltet und es werden die Kupplungen 12a, 12b geschlossen. Nun kann mit dem weiterhin funktionstüchtigen elektrischen Motor 11c des Lenkrad-Stellers 11 ein Unterstützungsmoment in das Lenksystem eingeleitet werden, und zwar vorrangig abermals in Abhängigkeit vom im Lenkrad-Steller 11 gemessenen Lenkmoment. Ggf. kann jedoch diese Unterstützung durch die geringere Leistungsfähigkeit des elektrischen Motors 11c im Lenkrad-Steller 11 begrenzt sein.

Bei einem Ausfall des Lenkmoment-Sensors 11b im Lenkrad-Steller 11 können die zuvor beschriebenen Abläufe so nicht umgesetzt werden, da dieser Lenkmoment-Sensor 11c zur Bestimmung des Lenkmoments und damit zur Einstellung der jeweiligen Unterstützungskraft eigentlich benötigt wird. Zwar besteht die Möglichkeit, einen zusätzlichen (redundanten) Lenkmomentsensor für diesen Fall zu verbauen, was sich jedoch negativ auf Kosten und Gewicht auswirkt. Daher wird vorgeschlagen, bei erkanntem Ausfall des Lenkmoment-Sensors 11b diesen zwar abzuschalten und die Kupplungen 12a, 12b wiederum zu schließen, gleichzeitig jedoch auf andere geeignete Weise auf das am Lenkrad 1 anliegende Moment zu schließen. Da nämlich das mechanische vorzugsweise flexible Übertragungselement 3 zwischen dem Lenkrad 1 und dem Lenkgetriebe 5 eine bekannte DrehSteifigkeit besitzt, kann auf das am Lenkrad 1 anliegende Moment geschlossen werden, wenn die Differenz zwischen einem am Lenkrad 1 gemessenen Drehwinkel und dem entsprechenden am Lenkgetriebe 5, insbesondere an dessen Ritzel 5a festgestellten Lenkwinkels gebildet und mit der DrehSteifigkeit des Übertragungselements 3 multipliziert wird. Mit Hilfe des so gewonnenen Momentes kann dann die nötige Unterstützungskraft der geregelten Servounterstützung bestimmt und der Elektromotor 8c entsprechend angesteuert werden.

## Patentansprüche

1. Betriebsverfahren für ein Lenksystem eines zweispurigen Kraftfahrzeugs mit einem Lenkgetriebe (5), welches Spurstangen (6a, 6b), die letztlich mit den lenkbaren Fahrzeug-Rädern (7a, 7b) mechanisch verbunden sind, einer Lenkanforderung entsprechend verlagert, weiterhin mit einem Elektromotor (8c) zum Einleiten einer eine Verlagerung der Spurstangen (6a, 6b) initiierenden oder unterstützenden Kraft in das Lenkgetriebe (5), wobei an einem vom Fahrer zu betätigenden Lenkrad (1) ein Lenkwinkel-Sensor(11a) und ein Lenkmoment-Sensor (11b) sowie ein elektromotorischer Lenkrad-Steller (11, 11c) vorgesehen sind, um einen vom Fahrer vorgegebenen Lenkwunsch unter Verarbeitung der Signale des Lenkwinkel-Sensors (11a) und des Lenkmoment-Sensors (11b) bei gleichzeitig geeigneter Ansteuerung des Lenkrad-Stellers (11, 11c) durch geeignete Ansteuerung des mit einem Drehwinkel-Sensor (8d) im weitesten Sinne ausgestatteten Elektromotors (8c) seitens einer elektronischen Steuereinheit umzusetzen, wobei weiterhin ein insbesondere flexibles mechanisches Übertragungselement (3) sowie zumindest eine schaltbare Kupplung (12a, 12b) oder ein sonstiges Trennelement zum Auftrennen oder Schließen einer mechanischen Verbindung zwischen dem Lenkrad (1) und einem Eingangselement (Ritzel 5a) des Lenkgetriebes (5) vorgesehen ist, so dass bei geschlossener oder geschlossenen Kupplung(en) (12a, 12b) oder geschlossenem oder geschlossenen Trennelement(en) über das Übertragungselement (3) und das Lenkgetriebe (5) an den lenkbaren Rädern (7a, 7b) ein vom Fahrer vorgegebener Lenkwunsch umsetzbar ist,
**dadurch gekennzeichnet, dass** bei einem Ausfall des Lenkmomentsensors (11 b) die Kupplung(en) (12a, 12b) oder das/die Trennelement(e) geschlossen wird oder werden und dass über die Differenz zwischen einem am Lenkrad (1) gemessenen Lenkwinkel und dem entsprechenden am Elektromotor (8c) gemessenen Lenkwinkel unter Berücksichtigung der bekannten Steifigkeit des im wesentlichen durch das Lenkrad (1) und das mechanische Übertragungselement (3) gebildeten mechanischen Lenkstrangs das anliegende Lenkmoment näherungsweise bestimmt und hieraus die nötige Unterstützungskraft des Elektromotors (8c) abgeleitet wird.

## Claims

1. An operating method for a steering system of a two-track motor vehicle with a steering gear (5), which displaces steering tie rods (6a, 6b) which are ultimately mechanically connected to the steerable vehicle wheels (7a, 7b) in accordance with a steering requirement, also having an electric motor (8c) to introduce a force initiating or assisting a displacement of the steering tie rods (6a, 6b), wherein a steering angle sensor (11a) and a steering torque sensor (11b) and an electromotive steering wheel actuator (11, 11c) are provided on a steering wheel (1) which is to be actuated by the driver in order to implement a steering request input by the driver with processing of the signals of the steering angle sensor (11a) and of the steering torque sensor (11b) while an electronic control unit simultaneously suitably actuates the steering wheel actuator (11, 11c) by suitable actuation of the electric motor (8c) which is equipped with a rotational angle sensor (8d) in the broadest sense, wherein an, more especially, flexible mechanical transmission element (3) as well as at least one shiftable clutch (12a, 12b) or another separation element for separating or closing a mechanical connection between the steering wheel (1) and an input element (pinion 5a) of the steering gear (5) are provided so that when the clutch(es) (12a, 12b) or the separation element(s) is/are closed, by means of the transmission element (3) and the steering gear (5) on the steerable wheels (7a, 7b), a steering request input by the driver can be implemented, **characterised in that** in the event of a failure of the steering torque sensor (11b), the clutch(es) (12a, 12b) or the separation element(s) is/are closed and **in that** the applied steering torque is approximately determined, and the necessary assisting force of the electric motor (8c) is derived therefrom, by means of the difference between a steering angle measured at the steering wheel (1) and the corresponding steering angle measured at the electric motor (8c) taking into account the known rigidity of the mechanical steering system substantially formed by the steering wheel (1) and the mechanical transmission element (3). ,

## Revendications

1. Procédé de gestion d'un système de direction d'un véhicule à double voie avec une transmission de direction (5) comportant,
- des barres d'accouplement (6a, 6b) reliées mécaniquement en sortie aux roues directrices (7a, 7b) du véhicule, en étant déplacées en fonction de la demande de braquage, ainsi qu'un moteur électrique (8c) pour produire un déplacement des barres d'accouplement (6a, 6b) ou de produire une force d'assistance appliquée à la transmission de direction (5),
- le volant actionné par le conducteur étant équipé d'un capteur d'angle de braquage (11a) et d'un capteur de couple de braquage (11b) ainsi que d'un actionneur de volant (11, 11c) à moteur électrique, pour transformer un souhait de braquage émis par le conducteur en traitant les signaux du capteur d'angle de braquage (11a) et du capteur de couple de direction (11b) avec commande appropriée simultanée de l'actionneur de volant de direction (11, 11c) par une commande appropriée du moteur électrique (8c) équipé dans le sens large d'un capteur d'angle de braquage (8d) au niveau de l'unité de commande électronique, et
- en outre, un élément de transmission mécanique (3) en particulier souple ainsi qu'au moins un embrayage commutable (12a, 12b) ou un autre élément de séparation permettant d'ouvrir ou de fermer une liaison mécanique entre le volant de direction (1) et un élément d'entrée (pignon 5a) de la transmission de direction (5) étant prévu, de façon que lorsque le ou les embrayages (12a, 12b) sont fermés ou que le ou les éléments de séparation sont fermés, un souhait prédéfini par le conducteur est converti par l'élément de transfert (3) et la transmission de direction (5), pour être appliqué aux roues directrices (7a, 7b),
**caractérisé en ce qu'**
en cas de défaillance du capteur de couple de direction (11b), les embrayages (12a, 12b) ou le ou les éléments de séparation sont fermés, et en fonction de la différence entre l'angle de direction mesuré sur le volant de direction (1) et l'angle de direction correspondant, mesuré sur le moteur électrique (8c), en tenant compte de la rigidité connue de la ligne mécanique, de direction, formée par le volant de direction (1) et l'élément de transmission mécanique (3), le couple de direction, appliqué, puisse se définir au moins approximativement pour en déduire la force d'assistance nécessaire du moteur électrique (8c).
